# EUROPÄISCHE PATENTANMELDUNG

(11) **EP 1 477 391 A2**
(43) Veröffentlichungstag der Anmeldung: **17.11.2004**
(21) Anmeldenummer: 04008930.2
(22) Anmeldetag: 15.04.2004
(51) Int. Cl.: B62D 21/15, B62D 33/06

(54) **Führerhaus für Kraftfahrzeuge**

(30) Priorität: 14.05.2003 DE 10321574
(71) Anmelder: DaimlerChrysler AG, 70567 Stuttgart (DE)
(72) Erfinder: Seifert, Jochen, 70619 Stuttgart (DE)

(57) **Zusammenfassung**

Die Erfindung bezieht sich auf ein Sicherheitssystem für Lastkraftwagen (10), bei dem die durch einen Aufprall generierte Rückwärtsbewegung eines Führerhauses (1) zur Energieaufnahme genutzt wird. Hierzu ist das Führerhaus (1) über ein Dämpfungsmittel (5) mit einem Fahrzeugrahmen (3) derart verbunden, dass dieses bei der Rückwärtsbewegung des Führerhauses (1) Verformungsenergie aufnehmen kann.

## Beschreibung

Die Erfindung betrifft ein Führerhaus für Kraftfahrzeuge, insbesondere Lastkraftwagen, mit einem sich in Richtung einer Fahrzeuglängsachse erstreckenden Fahrzeugrahmen und mindestens einem federnden und/oder dämpfenden Lagermittel zwischen dem Fahrzeugrahmen und dem Führerhaus.

Es ist bereits eine Aufhängungsanordnung für ein Führerhaus aus der DE 101 37 380 C1 bekannt. Die Aufhängungsanordnung weist dabei vier Konsolen auf, an denen sich ein Feder- oder Dämpfungselement mit seinem oberen Ende abstützt. Mit seinem unteren Ende stützt sich das jeweilige Feder- oder Dämpfungselement an einem Längsträger ab. Hierdurch wird die Bewegung des Führerhauses mit Bezug zur Fahrbahnebene im Wesentlichen in rechtwinkliger Richtung gedämpft.

Der Erfindung liegt die Aufgabe zugrunde, ein Führerhaus derart auszubilden und anzuordnen, dass ein sicherer Einsatz gewährleistet ist.

Gelöst wird die Aufgabe erfindungsgemäß dadurch, dass zwischen dem Fahrzeugrahmen und dem Führerhaus ein in Richtung der Fahrzeuglängsachse wirkendes Stoßmittel zur Aufnahme von Stoßenergie im Kollisionsfall vorgesehen ist. Hierdurch wird erreicht, dass bei der Verschiebung des Führerhauses zumindest ein Teil der abzubauenden Stoßenergie durch das Dämpfungsmittel aufgenommen wird. Der Anteil der Stoßenergie betreffend die Verformung und die Beschleunigung, insbesondere der Insassen, wird dementsprechend reduziert.

Hierzu ist es vorteilhaft, dass das Stoßmittel als Dämpfungs- oder Crashmittel ausgebildet ist und mindestens ein Druckkräfte aufnehmendes Druckelement und/oder mindestens ein Zugkräfte aufnehmendes Zugelement aufweist. Bei der Verwendung von Zugelementen wird ein mögliches kritisches Ausknicken des Dämpfungsmittels wie bei der Verwendung von Druckelementen verhindert. Daneben ist bei Verwendung von Zugelementen eine Umlenkung der aufzunehmenden Stoßkraft möglich.

Eine zusätzliche Möglichkeit ist gemäß einer Weiterbildung, dass mehrere Druckelemente und/oder Zugelemente parallel oder in Reihe wirkend angeordnet sind. Bei einer Reinschaltung von Druck- und Zugelementen ist es möglich, je nach Dämpfungsgrad zuerst das eine Element bzw. dessen Wirkung auszuschöpfen und anschließend, nach einem Teil des Verschiebewegs, die Wirksamkeit des anderen, dämpfungsärmeren Elements auszunutzen. Im Falle der parallelen Anordnung können alle verwendeten Elemente über den gesamten zur Verfügung stehenden Verschiebeweg im Einsatz sein.

Ferner ist es vorteilhaft, dass das Dämpfungsmittel zumindest teilweise plastisch und/oder zumindest teilweise elastisch verformbar ausgebildet ist und/oder Reibungselemente zur Aufnahme von Stoßenergie aufweist. Die Verwendung rein plastisch verformbarer Mittel gewährleistet einen nahezu spannungsfreien Verformungszustand nach dem Kollisionsfall.

Vorteilhaft ist es hierzu auch, dass das Dämpfungsmittel zumindest teilweise als Zugmittel ausgebildet ist, dem mindestens eine das Zugmittel umlenkende Umlenkeinheit mit einem Umlenkwinkel zwischen 2° und 180° zugeordnet ist. Die Kombination des Zugmittels mit der Umlegeeinheit gewährleistet mit Rücksicht auf die Fahrzeuggeometrie die Ausnutzung des zur Verfügung stehenden Verschiebewegs mit Rücksicht auf die Größe der zu verwendenden Dämpfungsmittel.

Gemäß einer bevorzugten Ausführungsform der erfindungsgemäßen Lösung ist schließlich vorgesehen, dass das Zugelement und/oder das Zugmittel mit einem ersten Ende an einem Rahmenlager des Fahrzeugrahmens und mit einem zweiten Ende an einem Stoßlager des Führerhauses angeordnet ist. Sowohl der Fahrzeugrahmen als auch das Führerhaus weisen dementsprechende Lager auf, so dass das verwendete Zugmittel mit Rücksicht auf die Umlenkeinheit beidseitig den Fahrzeugrahmen und das Führerhaus verbindet. Daneben ist der Einsatz mehrerer parallel zueinander angeordneter Zugmittel mit entsprechender Umlenkeinheit möglich.

Von besonderer Bedeutung ist für die vorliegende Erfindung, dass die Umlenkeinheit am Fahrzeugrahmen angeordnet ist und das Zugmittel ausgehend von der Wirkrichtung des Zugelements in eine durch die Stoßkraft generierte Bewegungsrichtung des Führerhauses umgelenkt ist. Die Wirkungsrichtung des Zugelements sollte der Bewegungsrichtung des Führerhauses entgegen wirken. Durch die Umlenkung des Zugmittels werden die Wirkrichtung des Zugelements und die Wirkrichtung des Führerhauses gleichgerichtet.

Im Zusammenhang mit der erfindungsgemäßen Ausbildung und Anordnung ist es von Vorteil, dass zwischen dem Führerhaus und dem Fahrzeugrahmen ein in die durch die Stoßkraft generierte Bewegungsrichtung des Führerhauses wirkendes Schiebelager angeordnet ist oder das Dämpfungsmittel zumindest teilweise als Schiebelager ausgebildet ist. Durch die Verwendung eines Schiebelagers zwischen dem Führerhaus und dem Fahrzeugrahmen wird die Bewegung des Führerhauses im Kollisionsfall, soweit sie den Kontakt zwischen dem Führerhaus und dem Fahrzeugrahmen betrifft, kontrolliert. Das Führerhaus kann somit nicht unkontrolliert vom Fahrzeugrahmen getrennt oder in eine sonst kritische Lage bezüglich des Fahrzeugrahmens gebracht werden.

Vorteilhaft ist es ferner, dass die durch das Dämpfungsmittel aufgenommene, spezifische Verformungsenergie mit Bezug zum Verformungsweg progressiv ausgebildet ist. Durch die progressive Ausbildung des Dämpfungsmittels wird bei leichteren Kollisionsstößen ein relativ großer Verformungsweg gewährleistet, wobei, mit Rücksicht auf den absolut verfügbaren Verformungsweg, der Dämpfungsgrad mit zunehmendem Verformungsweg ansteigt, so dass die damit verbundene Verzögerung bzw. Beschleunigung zunimmt.

Außerdem ist es vorteilhaft, dass die Umlenkeinheit gegen Stoßkräfte geschützt im Fahrzeugrahmen integriert ist. Die Funktionsfähigkeit der Umlenkeinheit, die mit Rücksicht auf die Umlenkgeometrie im vorderen Bereich des Fahrzeugrahmens angeordnet ist, wird somit gewährleistet.

Ferner ist es vorteilhaft, dass der durch die Stoßkraft generierte Verfahrweg des Führerhauses gleich dem oder zumindest proportional zum Verformungsweg des Dämpfungsmittels ist und mindestens 100 mm beträgt. Hierbei ist es vorgesehen, dass das Führerhaus neben dem Verfahrweg parallel zum Fahrzeugrahmen auch rechtwinklig dazu nach oben ausfährt und/oder auslenkt (Rotation). Dem Dämpfungsmittel kann ein Umlenkgetriebe in der Art eines Flaschenzuges zugeordnet sein, so dass der Verformungsweg größer oder kleiner als der Verfahrweg ist.

Weitere Vorteile und Einzelheiten der Erfindung sind in den Patentansprüchen und in der Beschreibung erläutert sowie in den Figuren dargestellt.

Dabei zeigen:
- Fig. 1: eine Prinzipskizze des Lastkraftwagens vor dem Aufprall auf ein Hindernis;
- Fig. 2: eine Prinzipskizze des Lastkraftwagens nach dem Aufprall auf das Hindernis.

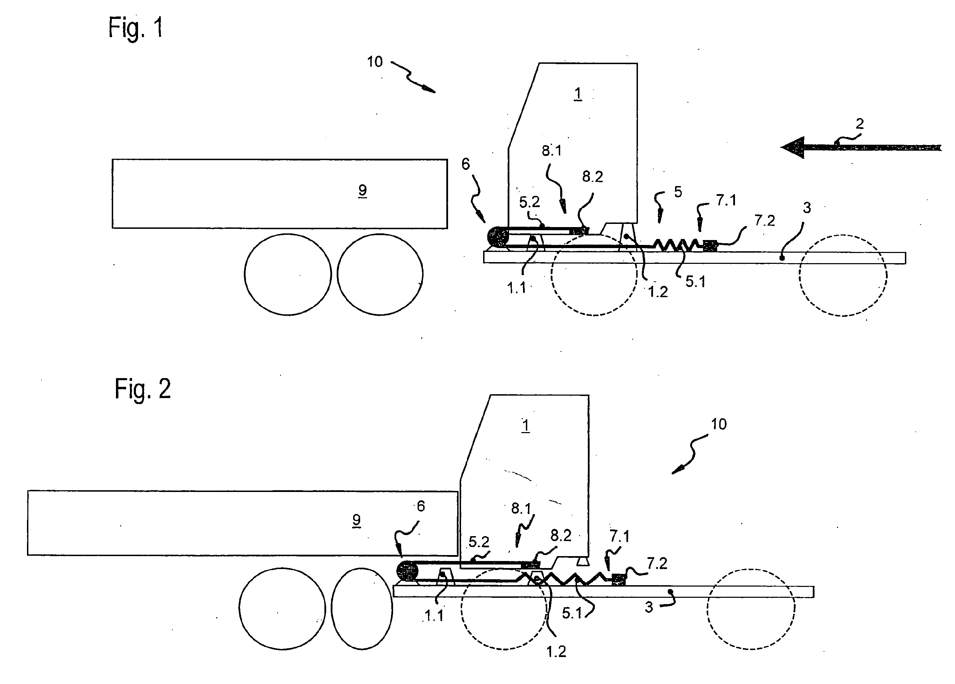

Ein in Fig. 1 dargestellter Lastkraftwagen 10 weist einen Fahrzeugrahmen 3 auf, an dem über ein erstes Lager 1.1 und ein zweites Lager 1.2 ein Führerhaus 1 angeordnet bzw. gelagert ist. Das Führerhaus 1 befindet sich dabei mit Bezug auf eine Fahrzeuglängsachse 2 im vorderen Bereich des Fahrzeugrahmens 3.
Neben dem ersten und zweiten Lager 1.1, 1.2, die über nicht dargestellte, in vertikaler Richtung wirkende Dämpfungselemente verfügen, ist zwischen dem Führerhaus 1 und dem Fahrzeugrahmen 3 ein Dämpfungsmittel 5 vorgesehen.
Das Dämpfungsmittel 5 ist dabei mit einem ersten Ende 7.1 über ein Rahmenlager 7.2 mit dem Fahrzeugrahmen 3 fest verbunden. Von diesem Rahmenlager 7.2 ausgehend verläuft das Dämpfungsmittel 5 über eine Umlenkeinheit 6 zu einem Stoßlager 8.2 hin, über welches das Dämpfungsmittel 5 mit seinem zweiten Ende 8.1 mit dem Führerhaus 1 fest verbunden ist. Das Dämpfungsmittel 5 verläuft dabei vom Rahmenlager 7.2 ausgehend nach vorne in Richtung der Fahrzeuglängsachse 2 und wird über die Umlenkeinheit 6 in die entgegengesetzte Richtung, d.h. um 180° umgelenkt und führt zum Stoßlager 8.2.
Im Bereich des Rahmenlagers 7.2 bzw. im Bereich des ersten Endes 7.1 weist das Dämpfungsmittel 5 ein Zugelement 5.1 auf, das bei einer Verformung bzw. Streckung Verformungsenergie aufnimmt. Vom ersten Ende 7.1 ausgehend schließt an dieses Zugelement 5.1 ein Zugmittel 5.2 an, welches an der Umlenkeinheit 6 zum Stoßlager 8.2 hin umgelenkt wird und damit die Verbindung zwischen dem Stoßlager 8.2 und dem Zugelement 5.1 bildet.
Beim Auftreffen des Lastkraftwagens 10 auf ein Hindernis 9 gemäß Fig. 2 wird das Führerhaus 1 relativ zum Fahrzeugrahmen 3 nach hinten, entgegen der Fahrtrichtung bewegt. Dabei kommt es zu einer Streckung des Zugelements 5.1, die in etwa proportional zum Verschiebeweg des Führerhauses 1 auf dem Fahrzeugrahmen 3 ist. Der Fahrzeugrahmen 3 sowie die Umlenkeinheit 6 tauchen dabei unterhalb des Hindernisses 9 ab, so dass die erfindungsgemäße Umlenkung und die damit verbundene Energieaufnahme durch das Zugelement 5.1 gewährleistet ist.
Die für den unkritischen Fall dienenden Lager 1.1, 1.2 werden bei der Verschiebung des Führerhauses 1 zerstört, wobei die Verbindung zwischen dem Führerhaus 1 und dem Fahrzeugrahmen 3, zumindest die Verschiebung betreffend, über nicht dargestellte Schiebelager gewährleistet ist.
In einem nicht dargestellten Ausführungsbeispiel ist das Zugelement 5.1 zwischen dem Stoßlager 8.2 des Führerhauses 1 und der Umlenkeinheit 6 oder zwischen dem Stoßlager 8.2 und dem Fahrzeugrahmen 3 angeordnet, wobei bei diesem Ausführungsbeispiel auf die Umlenkeinheit 6 verzichtet wird. Daneben ist in einem weiteren Ausführungsbeispiel vorgesehen, dem Dämpfungsmittel 5 ein Druckelement zuzuordnen, welches dann zwischen dem Stoßlager 8.2 des Führerhauses 1 und dem Fahrzeugrahmen 3 angeordnet ist. Grundsätzlich sind in verschiedenen Ausführungsbeispielen mehrere Dämpfungsmittel, Zugelemente oder Druckelemente parallel oder in Reihe geschaltet vorgesehen.

## Patentansprüche

1. Führerhaus (1) für Kraftfahrzeuge, insbesondere Lastkraftwagen, mit einem sich in Richtung einer Fahrzeuglängsachse (2) erstreckenden Fahrzeugrahmen (3) und mindestens einem federnden und/oder dämpfenden Lagermittel (1.1) zwischen dem Fahrzeugrahmen (3) und dem Führerhaus (1),
**dadurch gekennzeichnet,**
**dass** zwischen dem Fahrzeugrahmen (3) und dem Führerhaus (1) ein in Richtung der Fahrzeuglängsachse (2) wirkendes Stoßmittel (5) zur Aufnahme von Stoßenergie im Kollisionsfall vorgesehen ist.

2. Vorrichtung nach Anspruch 1,
**dadurch gekennzeichnet,**
**dass** das Stoßmittel (5) als Dämpfungs- oder Crashmittel ausgebildet ist und mindestens ein Druckkräfte aufnehmendes Druckelement und/oder mindestens ein Zugkräfte aufnehmendes Zugelement (5.1) aufweist.

3. Vorrichtung nach Anspruch 1 oder 2,
**dadurch gekennzeichnet,**
**dass** mehrere Druckelemente und/oder Zugelemente (5.1) parallel oder in Reihe wirkend angeordnet sind.

4. Vorrichtung nach Anspruch 1 oder 2,
**dadurch gekennzeichnet,**
**dass** das Dämpfungsmittel (5) zumindest teilweise plastisch und/oder zumindest teilweise elastisch verformbar ausgebildet ist und/oder Reibungselemente zur Aufnahme von Stoßenergie aufweist.

5. Vorrichtung nach einem der vorhergehenden Ansprüche,
**dadurch gekennzeichnet,**
**dass** das Dämpfungsmittel (5) zumindest teilweise als Zugmittel (5.2) ausgebildet ist, dem mindestens eine das Zugmittel (5.2) umlenkende Umlenkeinheit (6) mit einem Umlenkwinkel zwischen 2° und 180° zugeordnet ist.

6. Vorrichtung nach einem der vorhergehenden Ansprüche,
**dadurch gekennzeichnet,**
**dass** das Zugelement (5.1) und/oder das Zugmittel (5.2) mit einem ersten Ende (7.1) an einem Rahmenlager (7.2) des Fahrzeugrahmens (3) und mit einem zweiten Ende (8.1) an einem Stoßlager (8.2) des Führerhauses (1) angeordnet ist.

7. Vorrichtung nach einem der vorhergehenden Ansprüche,
**dadurch gekennzeichnet,**
**dass** die Umlenkeinheit (6) am Fahrzeugrahmen (3) angeordnet ist und das Zugmittel (5.2) ausgehend von der Wirkrichtung des Zugelements (5.1) in eine durch die Stoßkraft generierte Bewegungsrichtung des Führerhauses (1) umgelenkt ist.

8. Vorrichtung nach einem der vorhergehenden Ansprüche,
**dadurch gekennzeichnet,**
**dass** zwischen dem Führerhaus (1) und dem Fahrzeugrahmen (3) ein in die durch die Stoßkraft generierte Bewegungsrichtung des Führerhauses (1) wirkendes Schiebelager angeordnet ist oder das Dämpfungsmittel (5) zumindest teilweise als Schiebelager ausgebildet ist.

9. Vorrichtung nach einem der vorhergehenden Ansprüche,
**dadurch gekennzeichnet,**
**dass** die durch das Dämpfungsmittel (5) aufgenommene spezifische Verformungsenergie mit Bezug zum Verformungsweg progressiv ausgebildet ist.

10. Vorrichtung nach einem der vorhergehenden Ansprüche,
**dadurch gekennzeichnet,**
**dass** die Umlenkeinheit (6) gegen Stoßkräfte geschützt im Fahrzeugrahmen (3) integriert ist.

11. Vorrichtung nach einem der vorhergehenden Ansprüche,
**dadurch gekennzeichnet,**
**dass** der durch die Stoßkraft generierte Verfahrweg des Führerhauses (1) gleich dem oder zumindest proportional zum Verformungsweg des Dämpfungsmittels (5) ist und mindestens 100 mm beträgt.
